# EUROPEAN PATENT APPLICATION

(11) **EP 1 354 792 A1**
(43) Date of publication of application: **22.10.2003**
(21) Application number: 02425244.7
(22) Date of filing: 18.04.2002
(51) Int. Cl.: B62M 9/10

(54) **Sprocket assembly for a bicycle speed change**

(71) Applicant: CAMPAGNOLO S.R.L., I-36100 Vicenza (IT)
(72) Inventor: Valle, Maurizio, c/o Campagnolo S.r.l., 36100 Vicenza (IT)
(74) Representative: Notaro, Giancarlo

(57) **Abstract**

Gear assembly for a bicycle gear change, comprising at least one gear with a larger diameter (28) and at least one gear with a smaller diameter (30), said gears being destined to cooperate with a chain (16) selectively movable from one to the other of said gears (28, 30) to perform a gear change. The gear with the larger diameter (28) comprises at least one sector dedicated to upwards shifting (44, 46) including a plurality of shifting aid means to facilitate upwards shifting (52, 54, 56), and at least one sector dedicated to downwards shifting (40, 42) including a plurality of shifting aid means to facilitate downwards shifting (50).

## Description

The present invention relates to a gear assembly for a bicycle gear change, having the characteristics set forth in the preamble of Claim 1.

The present invention has been developed in order to improve the gear change between a gear with a smaller diameter and a gear with a larger diameter and vice versa, of a bicycle gear change. In the present description and in the accompanying claims, "gear change" is intended as the operation through which the transmission chain of the bicycle passes from a condition in which it engages one gear to a condition in which the chain engages another gear of the same gear assembly. A gear change always requires the chain shifting from a gear with a larger diameter to a gear with a smaller diameter, or vice versa, which may be adjacent or not to one another. In the description and in the claims the term "upwards shifting" has been used to indicate the operation of gear change from a gear with a smaller diameter to a gear with a larger diameter and the term "downwards shifting" to indicate the operation of gear change from a gear with a larger diameter to a gear with a smaller diameter.

The present invention has been developed with particular regard to the front gear assembly of a gear change of a bicycle, although, it is not limited to this use, as it may also be applied to the rear sprocket assembly of the gear change. Therefore, within the scope of the present application, the term "gear" is intended as a general toothed element suitable to engage the chain of the bicycle and it is intended that this toothed element may take the form of a toothed chain wheel, in the case of the front part of the gear change, and the form of a toothed sprocket wheel, in the case of the rear part of the gear change.

Especially in the field of racing bicycles, it is particularly important to realize gear changes which make it possible to perform smoothly and without wrenching shifting gear change operations, both upwards and downwards, in all riding conditions. Various constructional contrivances have already been proposed with the purpose of favouring gear change, for example in relation to the form of the gear teeth, to shifting aid means including rivets which project axially from the plane of the gear, or to reciprocal positioning of the gears.

Notwithstanding the various already known contrivances to facilitate shifting, there is still the necessity to improve shifting conditions to make shifting smoother and more precise, especially in particular conditions, such as when changing under stress.

The object of the present invention is to provide an improved type of gear assembly which satisfies the aforesaid requirement.

According to the present invention, this object is attained by a gear assembly having the characteristics forming the object of the claims.

The present invention shall now be described in detail, purely as a non-limiting example, with reference to the accompanying drawings, in which:
- Figure 1 is a schematic side view of a bicycle,
- Figure 2 is a front elevation of a gear assembly according to the present invention,
- Figures 3 and 4 are front elevations of the two faces of the gear indicated by the arrow IV in Figure 2,
- Figures 5 and 6 show the gear assembly according to the present invention during a downwards shifting, and
- Figure 7 shows the gear assembly according to the present invention during an upwards shifting.

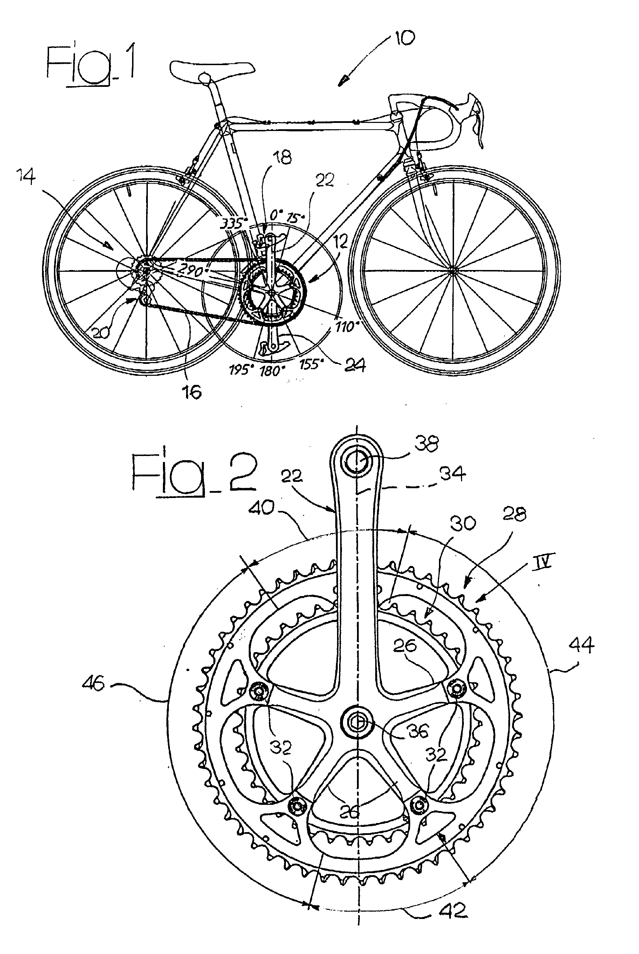

In Figure 1, the number 10 indicates a racing bicycle including a front gear assembly 12 and a rear sprocket assembly 14 connected to each other by a chain 16. The bicycle 10 comprises a front derailleur 18 to control gear change on the front gear assembly 12 and a rear derailleur 20 to control gear change on the rear sprockets 14. The front gear assembly 12 comprises a right pedal crank 22 and a left pedal crank 24.

Figure 1 indicates, as reference position for the rotation angles of the pedal cranks 22 and 24, the position in which the right pedal crank 22 is vertical and facing upwards and the value of 0° has been attributed to this position.

The present invention originates from the intuition of the inventor that by dedicating some sectors of the gears to downwards shifting and other sectors of the same gears to upwards shifting, both types of shifting are improved. It is also based on the further intuition, confirmed by experiments, that during racing some angular positions are particularly suited to optimally perform downwards shifting, that is from the gear with the larger diameter to the gear with the smaller diameter while, on the contrary, other angular positions are more suited to optimally perform upwards shifting, that is from the gear with the smaller diameter to the gear with the larger diameter.

Therefore, in the present invention at least one of the gears of the assembly presents sectors dedicated (or specialized) for one type of shifting (downwards or upwards shifting). In particular, the invention proposes the realization, on at least one gear, at least one sector dedicated to downwards shifting, and at least one sector dedicated to upwards shifting. As shall be described below, the downwards shifting sector is provided with shifting aid means which facilitate downwards shifting, and the upwards shifting sector is provided with shifting aid means which facilitate upwards shifting. Preferably, two downwards shifting sectors which coincide with the zones of the gears by the axis of the pedal crank and two upwards shifting sectors by the zones of the gears complementary to those dedicated to downwards shifting, are provided.

Figure 2 shows an embodiment of the present invention applied to a front gear assembly 12 comprising a right pedal crank 22 provided with radial arms 26 to which a gear with a larger diameter 28 and a gear with a smaller diameter 30 are fixed. For those skilled in the field, it is evident that the description is also applied to the case of a front gear assembly with three gears. In this case the intermediate gear is considered as the gear with the smaller diameter when considering the gears pair formed by the larger and by the intermediate gear, while it is considered as the gear with the larger diameter when considering the gears pair formed by the intermediate and by the smaller gear. Moreover, the present invention may also be applied to the rear sprocket assembly 14.

With reference to Figure 2, the gear with the larger diameter 28 is mounted on the pedal crank 22 so as to establish a univocal angular relation with it. This may be obtained by positioning or shaping the fixing zones 32 between the gear 28 and the pedal crank 22 so as to define a univocal assembly position of the gear 28 in relation to the pedal crank 22.

The pedal crank 22 has a longitudinal axis 34 which links the centre of the hole 36 for the connection to the bottom bracket spindle with the centre 38 of the hole for the connection to the pedal.

The gear with the larger diameter 28 is divided into four sectors complementary to one another: two downwards shifting sectors 40, 42 and two upwards shifting sectors 44, 46. The sectors 40, 42 are diametrally opposite each other and are provided with shifting aid means which facilitate downwards shifting, that is from the gear with the larger diameter 28 to the gear with the smaller diameter 30. Also sectors 44, 46 are diametrally opposite each other and are provided with shifting aid means which facilitate upwards shifting, that is from the gear with the smaller diameter 30 to the gear with the larger diameter 28.

The longitudinal axis 34 of the pedal crank 22 crosses the two downwards shifting sectors 40, 42. The two sectors 40, 42 have a common median axis which is angularly displaced in relation to the longitudinal axis 34 in the opposite direction to the racing direction, by a value between 5° and 15°. The two upwards shifting sectors 44, 46 have a common median axis that is positioned at 90° in relation to the median axis of the downwards shifting sectors 40, 42. The two downwards shifting sectors 40, 42 have substantially the same angular width, which is preferably between 30° and 70°, and even more preferably between 35° and 45°. The two upwards shifting sectors have substantially the same angular width, which is preferably between 110° and 150°, and even more preferably between 135° and 145°. If, as stated, the longitudinal axis 34 of the pedal crank 22 is considered as the reference axis for the angular positions, and it is given to said longitudinal axis 34 the value of 0°, in the embodiment of the invention shown in the Figures the downwards shifting sector 40 extends from 335° to 15°, the upwards shifting sector 44 extends from 15° to 155°, the downwards shifting sector 42 extends from 155° to 195° and the upwards shifting sector 46 extends from 195° to 335°. Of course, these values are purely indicative and may vary in other embodiments of the present invention.

It can be seen that the sectors dedicated to upwards shifting have a greater width than the sectors dedicated to downwards shifting. Preferably, the ratio between the angular extension of the sectors dedicated to upwards shifting and the angular extension of the sectors dedicated to downwards shifting is between 1.5 and 5, and even more preferably between 2.5 and 4.5.

The upwards shifting and the downwards shifting aid means may be made in any known way in the art. The important factor for the objects of the present invention is that the downwards shifting aid means are specifically realized so that they favour disengaging of the chain from the gear with the larger diameter when the chain is subjected to thrust in the direction parallel to the rotation axis of the gear which removes the chain from the gear, while the upwards shifting aid means are made so that they favour engaging of the chain with the gear with the larger diameter when the chain is subjected to thrust in the direction parallel to the rotation axis of the gear which draws the chain towards the gear.

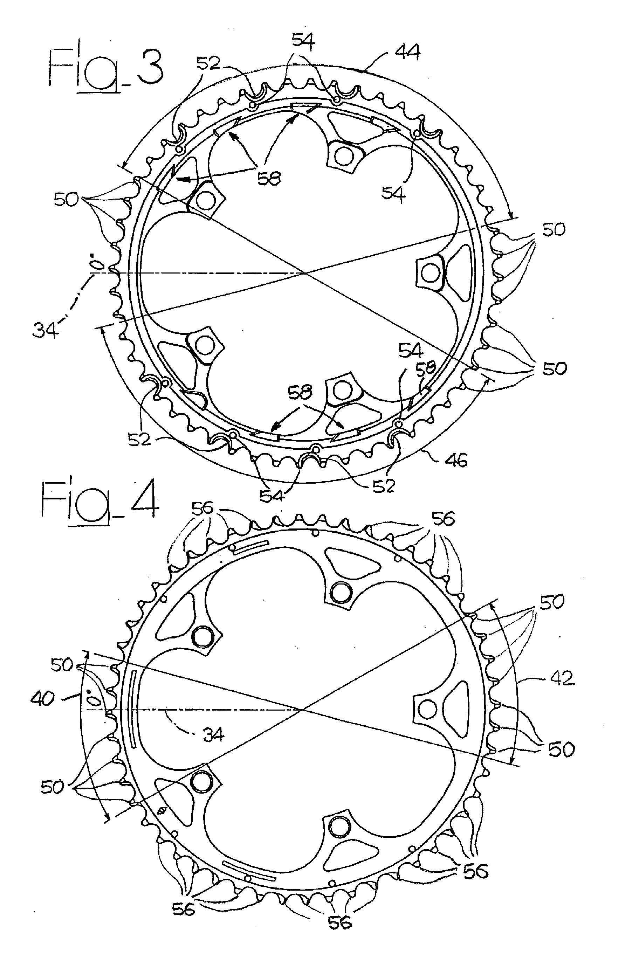

A possible embodiment of the shifting aid means is illustrated in Figures 3 and 4 which show, respectively, the face of the gear with the larger diameter 28 facing the gear with the smaller diameter 30, and the face of the gear 28 opposite to the one facing the gear with the smaller diameter 30. The downwards shifting aid means may be formed of bevels 50 formed on one or both faces of the gear 28 and/or on one or both sides of the teeth. Preferably, all teeth included in the downwards shifting sectors 40, 42 are provided with said bevels 50.

Again with reference to Figures 3 and 4, the upwards shifting aid means comprise:
- relief cuts 52 formed in the groove between two adjacent teeth on the face of the gear 28 facing towards the gear with the smaller diameter,
- pockets 58 formed on the face of the gear 28 facing the gear with the smaller diameter, by the inner circumferential edge of the gear,
- pins 54 for engaging the chain, projecting from the face of the gear 28 facing towards the gear with the smaller diameter 30 and positioned near said pockets, and
- bevels 56 formed on the sides of two teeth preceding each pin 54 in the direction of rotation of the gear 28, formed on the face of the gear opposite to the one facing the gear with the smaller diameter 30.

The upwards shifting aid means are positioned in the most favourable angular positions inside the respective sectors 44, 46.

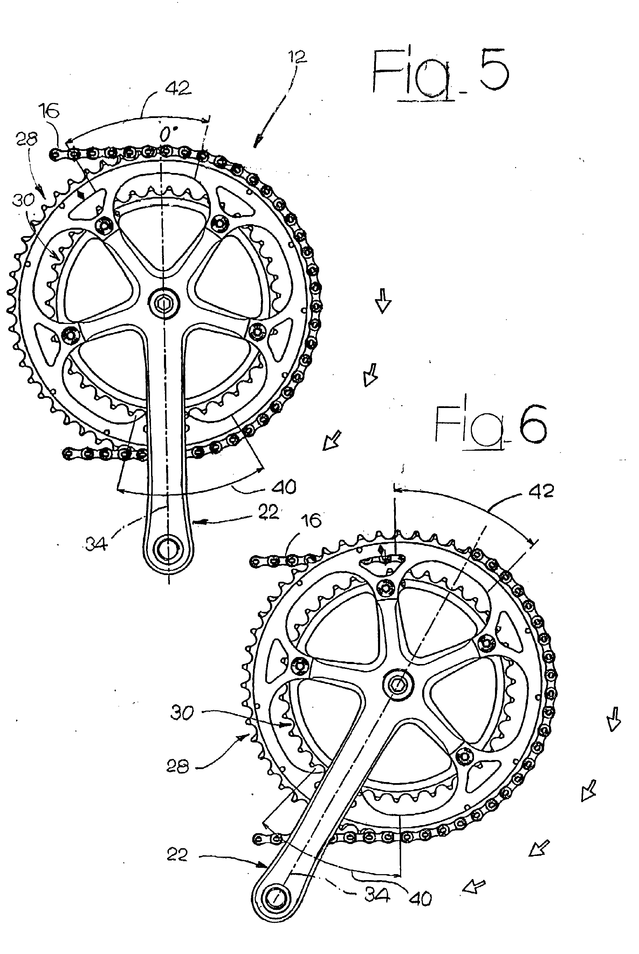

Figures 5 and 6 show a downwards shifting operation. Initially, the chain engages the gear with the larger diameter 28 as shown in Figure 5 and it is shifted by the derailleur towards the gear with the smaller diameter 30 to cause the gear changes to the gear with the smaller diameter 28 as shown in Figure 6. Consequently, the downwards shifting operation is performed by the sectors 40, 42. Experiments have shown that the conditions for downwards shifting are favoured when this shifting occurs in angular sectors of the gear by the axis of the pedal crank.

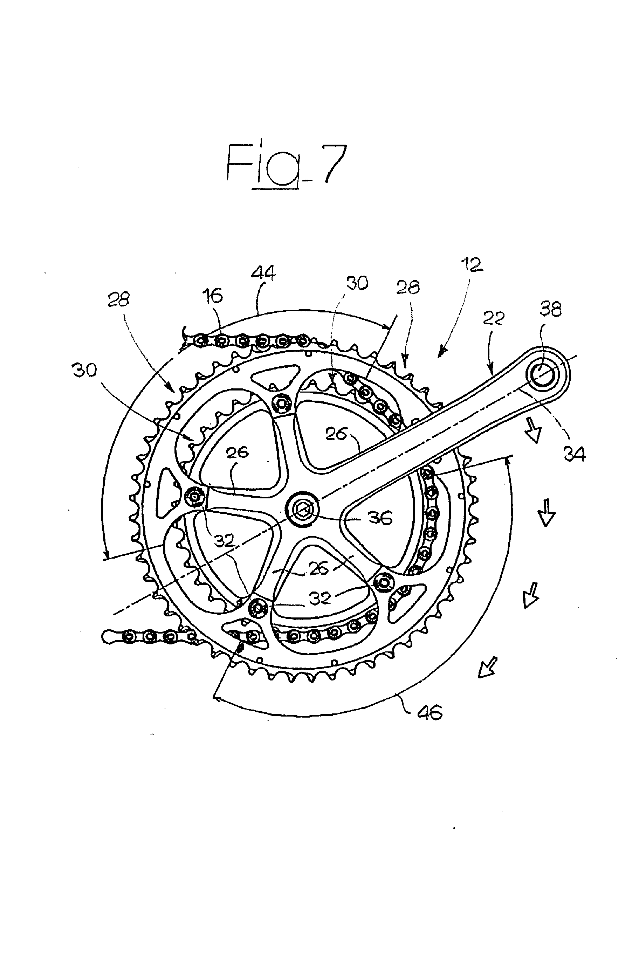

Figure 7 shows the gear assembly 12 according to the present invention during an upwards shifting operation, that is from the gear with the smaller diameter to the gear with the larger diameter 28. Subdivision of the gear with the larger diameter 28 into upwards and downwards shifting sectors makes the upwards shifting occurring by the sectors 44, 46. Experiments have shown that the conditions for upwards shifting are favoured when this shifting occurs in angular sectors of the gear complementary to those dedicated to downwards shifting.

Of course, moreover, without prejudice to the principle of the invention, the constructional details and embodiments may vary widely in relation to what is described and illustrated herein purely as an example, without however departing from the scope of the present invention as defined in the accompanying claims.

For example, the number of sectors dedicated to downwards shifting and to upwards shifting may be different from two, for example three or four.

## Claims

1. Gear assembly for a bicycle gear change, comprising at least one gear with a larger diameter (28) and at least one gear with a smaller diameter (30), said gears being destined to cooperate with a chain (16) shiftable from one to the other of said gears (28, 30), to perform a gear change, **characterized in that** said gear with a larger diameter (28) comprises at least one sector dedicated to upwards shifting (44, 46), including shifting aid means (52, 54, 56, 58) to facilitate upwards shifting, and at least one sector dedicated to downwards shifting (40, 42) including shifting aid means (50) to facilitate downwards shifting.

2. Gear assembly according to Claim 1, **characterized in that** it comprises two downwards shifting sectors (40, 42) diametrally opposite to each other.

3. Gear assembly according to Claim 1, **characterized in that** it comprises two upwards shifting sectors (44, 46) diametrally opposite to each other.

4. Gear assembly according to Claims 2 and 3, **characterized in that** said downwards shifting sectors (40, 42) and said upwards shifting sectors (44, 46) are complementary to each other.

5. Gear assembly according to Claim 1, **characterized in that** said at least one sector dedicated to upwards shifting (44, 46) has a larger angular extension than said at least one sector dedicated to downwards shifting (40, 42).

6. Gear assembly according to Claim 5, **characterized in that** the ratio between the angular extension of said at least one sector dedicated to upwards shifting (44, 46) and the angular extension of said at least one sector dedicated to downwards shifting (40, 42) is between 1.5 and 5.

7. Gear assembly according to Claim 5, **characterized in that** the ratio between the angular extension of said at least one sector dedicated to upwards shifting (44, 46) and the angular extension of said at least one sector dedicated to downwards shifting (40, 42) is between 2.5 and 4.5.

8. Gear assembly according to Claim 2, **characterized in that** said sectors for downwards shifting (40, 42) have substantially the same angular extension.

9. Gear assembly according to Claim 3, **characterized in that** said sectors for upwards shifting (44, 46) have substantially the same angular extension.

10. Gear assembly according to Claim 2, **characterized in that** each of said sectors for downwards shifting (40, 42) have an angular extension between 30° and 70°.

11. Gear assembly according to Claim 2, **characterized in that** each of said sectors for downwards shifting (40, 42) have an angular extension between 35° and 45°.

12. Gear assembly according to Claim 3, **characterized in that** each of said sectors for upwards shifting (44, 46) have substantially an angular extension between 110° and 150°.

13. Gear assembly according to Claim 3, **characterized in that** each of said sectors for upwards shifting (44, 46) have an angular extension between 135° and 145°.

14. Gear assembly according to Claim 1, **characterized in that** said at least one sector for downwards shifting (40, 42) is positioned in an area of said gear with larger diameter (28) destined to be crossed by the longitudinal axis (34) of a pedal crank (22), when mounted on the gear assembly.

15. Gear assembly according to Claim 1, **characterized in that** it comprises a pedal crank (22) having a longitudinal axis (34) mounted in a univocal univocal position in relation to said gear with larger diameter (28).

16. Gear assembly according to Claim 15, **characterized in that** said at least one sector for downwards shifting (40, 42) has a median axis angularly displaced in relation to the longitudinal axis (34) of the pedal crank (22).

17. Gear assembly according to Claim 16, **characterized in that** the median axis of said at least one sector for downwards shifting (40, 42) is angularly displaced in relation to the longitudinal axis (34) of the pedal crank (22) by a value between 5° and 15°.

18. Gear assembly according to Claim 17, **characterized in that** said at least one upwards shifting sector (44, 46) has a median axis arranged substantially at 90° in relation to the median axis of said at least one downwards shifting sector (40, 42).
